# EUROPEAN PATENT SPECIFICATION

(11) **EP 1 935 002 B1**
(45) Date of publication and mention of the grant of the patent: **17.11.2010**
(21) Application number: 06809395.4
(22) Date of filing: 25.09.2006
(51) Int. Cl.: H01K 1/52, H01K 1/32, H01K 3/00, H01K 3/22

(54) **CRACKING OF HALOGENATED HYDROCARBON IN BULB OF A HALOGEN LAMP BY EXTERNAL HEAT SOURCE**
KRACKVERFAHREN FÜR HALOGENIERTEN KOHLENWASSERSTOFF IN EINER HALOGENLAMPE MITTELS EXTERNER WÄRMEQUELLE
CRAQUAGE D'HYDROCARBURE HALOGÉNÉ DANS UNE AMPOULE D'UNE LAMPE HALOGÈNE PAR UNE SOURCE DE CHALEUR EXTERNE

(30) Priority: 05.10.2005 EP 05109246
(43) Date of publication of application: 25.06.2008
(73) Proprietor: Philips Intellectual Property & Standards GmbH, 20099 Hamburg (DE); Koninklijke Philips Electronics N.V., 5621 BA Eindhoven (NL)
(72) Inventor: VAN RIJSWICK, Mathias Hubertus Johannes, 52066 Aachen (DE); FELDMANN, Jörg, 52066 Aachen (DE); DEKKERS, Walterus Johannes Maria, 52066 Aachen (DE)
(74) Representative: Bekkers, Joost J.J
(86) International application number: PCT/IB2006/053471
(87) International publication number: WO 2007/039848

(56) References cited:
- DE-A1- 1 489 467
- JP-A- 9 199 033
- US-A- 3 798 491

## Description

This invention relates to a method of treating a halogen lamp and to a method of manufacture of a halogen lamp. The invention also relates to a halogen lamp.

A halogen lamp, or high-pressure halogen lamp, is an incandescent lamp with a filament or coil, generally of tungsten, enclosed in a vitreous bulb together with a mixture of gases including one or more inert gases such as argon, xenon, krypton, etc., and a compound containing a halogen such as iodine, bromine or chlorine, at a pressure of a few atmospheres. Each of the two ends, or legs, of the filament is attached to one end of a pole or lead wire. The other ends of the lead wires emerge from a pinched seal of the bulb and are connected in turn to electrodes. In a single-ended bulb, both leads are pinched in one end of the lamp. An operating voltage can be applied across the ends of the electrodes to allow a current to flow through the filament, causing this to glow intensely. The inert gas inhibits to some extent the transport of tungsten vapour from the filament, whereas the presence of a halogen allows the tungsten filament to be operated at higher temperatures and higher efficacies, since the halogen participates in a tungsten transport cycle, returning tungsten to the incandescent filament, avoiding blackening of the bulb and therefore prolonging lamp life.

It is possible to introduce a halogen into such a lamp in a number of ways. For example, the halogen could be introduced into the lamp in molecular form, e.g. pure iodine or bromine, or as a hydrogen halide such as hydrobromic acid (HBr). However, pure halogens and hydrogen halides are aggressive and difficult to handle in the production process. The usual approach is to use halogenated hydrocarbons such as dibromomethane (CH₂Br₂), methylbromide (CH₃Br), dichloromethane (CH₂Cl₂), etc., since these compounds are less toxic and aggressive than halides, and much easier to dose.

To release the halogen necessary for the tungsten-halogen transport cycle required for full operation of the lamp, the halogenated hydrocarbon must first be "cracked". A number of different cracking processes are known. For example, in the method suggested in German Patent Application 1 489 467, in a technique known as "flashing the coil", a relatively high voltage is applied across the electrodes of the lamp to allow a current to flow through the tungsten filament, thereby heating the filament and the enclosed fill gas to a temperature at which the halogenated hydrocarbon is cracked, thus freeing up the halogen and allowing the tungsten-halogen cycle to commence. In another approach, briefly mentioned in US 3,798,491, the fill gas is heated by establishing a discharge arc between the electrodes and an external high-frequency coil. However, the cracking techniques applied in state of the art manufacturing processes have several drawbacks. For example, carbon can be deposited on the bulb walls during cracking, thereby blackening the walls of the lamp and reducing the lumen output of the lamp. Also, carbon deposited on the coil can cause the coil to sag, increasing the likelihood of a short circuit between points on neighbouring windings of the coil and thereby reducing the performance and lifetime of the lamp.

Furthermore, such lamps have proven to be susceptible to breakage caused by shock, particularly in the type of failure known as zero-hour failure, where the lamp fails immediately after turning it on. Failure of this type is unacceptable to a purchaser of such a lamp. Furthermore, because the legs of the coil become brittle and therefore susceptible to breakage as a result of shock, directly as a result of the cracking process, such lamps may not even survive the transport to the consumer.

Therefore, an object of the present invention is to provide a way of reducing the tendency of such a halogen lamp to breakage, in particular the legs of the filament, and thereby to prolong the lifetime of the lamp.

To this end, the present invention provides methods of treating a halogen lamp comprising a filament supported by legs in a vitreous bulb enclosing a halogenated hydrocarbon fill gas, which methods comprise applying to the lamp heat and/or radiation such as light radiation, electromagnetic radiation, etc.- prior to initial operation of the lamp - from a source external to the lamp, so that the halogenated hydrocarbon fill gas is cracked and carbon is deposited essentially at a specific region of the lamp, whereby the specific region of the lamp is a region in the lamp other than the legs of the filament of the lamp.

In one method according to the invention, the heat to the lamp is applied from a source external to the lamp, so that the halogenated hydrocarbon fill gas is cracked and carbon is deposited essentially on an interior surface of a shoulder-tip of the lamp. Preferably, in this method the heat is applied to the lamp using a burner flame.

In a further method according to the invention the radiation applied to the specific region of the lamp comprises a laser beam originating from a source external to the lamp, and the radiation is applied to the specific region of the lamp such that the specific region of the lamp at which the laser beam is directed is heated to a predefined temperature for a predefined length of time to deposit carbon essentially at the specific region. Use of a laser beam offers an even greater degree of precision in heating a specific region of the lamp. Therefore, using this method the carbon may also be deposited essentially on an interior surface of a shoulder-tip of the lamp, but the carbon could equally well be deposited at other suitable regions, preferably a lead wire connected to the filament via one of the supporting legs.

Generally, the legs by which the filament are supported are of one piece with the filament, and are usually connected to somewhat thicker lead wires, generally made of Molybdenum, across which is applied a voltage during operation of the lamp. Tests have shown that carbon released in a cracking process according to the state of the art as described above, such as flashing the coil by applying an operating voltage across the leads of the lamp, is that such carbon is free to combine with tungsten atoms evaporated from the incandescent filament to give tungsten carbide, which tends to be deposited on the legs of the tungsten filament, since these are slightly cooler than the filament itself. As a result, the legs of the tungsten filament become brittle, even directly after cracking, considerably increasing the likelihood of breakage of the filament legs.

An obvious advantage of the method according to the invention, where the hydrocarbons are specifically cracked prior to initial operation, i.e. before a voltage in the range of an operating voltage is applied for the first time across the leads of the lamp, is therefore that coil breakage due to the deposition of tungsten carbide on the legs of the filament of the lamp is effectively avoided. The shock resistance of a lamp treated in this way is greatly increased, while the likelihood of zero-hour failure due to brittle filament legs is largely eliminated for a lamp which has been treated, using a method according to the invention, to deposit the carbon at a specific region other than on the legs of the filament.

The filament, also commonly referred to as the coil, is most usually made of tungsten, specially doped for lamp applications. Therefore, in the following, the terms "filament" and "coil" are synonymous, and, where reference is made to "tungsten", it should be understood that the method according to the invention is not restricted only to such halogen lamps that implement a tungsten filament, but can be applied to halogen lamps where an element other than tungsten is used to form the filament.

The source of heat and/or radiation can be located in the immediate vicinity of the lamp, or can be situated at some distance from the lamp. The heat and/or radiation directed at the lamp reaches the fill gas of the lamp by travelling through or being transported through the vitreous walls of the lamp. It will be stressed at this point that, to crack the halogenated hydrocarbons using a method according to the invention, it is at no point necessary to apply a voltage across the electrodes of the lamp, i.e. a current is not required to flow through the tungsten coil as would be the case in cracking the halogenated hydrocarbons by flashing the coil. The method can be applied at any appropriate stage before turning on the lamp for the first time. Therefore, since the coil does not become incandescent during the cracking process, tungsten atoms are not given the opportunity to evaporate from the coil during this process, and the formation of tungsten carbide is therefore effectively inhibited.

The further dependent claims and the subsequent description disclose particularly advantageous embodiments and features of the invention.

The heat and/or radiation applied to the lamp will cause that area of the lamp at which it is directed to heat up considerably, thereby heating the halogenated hydrocarbons and causing them to crack, thus releasing the halogen and also the carbon, which is then free to deposit itself at some point within the lamp. Generally, it is undesirable to have carbon deposited on just any part of the lamp. For example, carbon deposits around the inner side surfaces of the bulb might decrease the lumen output of the lamp. Equally, it is undesirable to have the carbon deposit itself on the coil of the lamp, since this might ultimately lead to coil sag or other detrimental effects, with a resulting shortened lifespan of the lamp. Other regions of the lamp are more suitable for carbon depositing.

Therefore, in a particularly preferred embodiment of the invention, the heat and/or radiation is applied to that specific region of the lamp at which it is desired to have the carbon deposited, since it has been observed that the carbon tends to be deposited essentially in the area which is being heated. The heat and/or radiation is thereby generated by a source external to the lamp, and the specific region of the lamp is heated to a predefined temperature, preferably greater than ca. 500°C, most preferably greater than ca. 700°C, for a predefined length of time.

As already mentioned above, in one preferred embodiment of the invention, the specific region of the lamp is heated using a burner flame such as that generated by a methane-oxygen burner or other suitable type of burner. Such a flame can be directed with a sufficient degree of precision at a certain region of the lamp. Quartz lamps filled with a pressure in the range of 5-15 bar can be heated locally to such high temperatures without bulb deformation or bulb fracture. The burner flame can preferably be directed at the tip of the lamp, also known as the shoulder or shoulder-tip region (the area of the lamp opposite to the pinch end in a single-ended lamp). For example, by specifically heating this area to a certain temperature, say 1000° C, for a predefined length of time, say 20 s, the halogenated hydrocarbons of the fill gas are cracked and the carbon freed in the cracking process settles, according to the first method mentioned above, essentially on the heated inside surfaces of the lamp's shoulder tip region, mainly in the form of graphite. This approach might be particularly suitable for applications in which the shoulder-tip of the halogen lamp would be blackened anyway, or covered with a cap, e.g. in automotive applications where the tip region is often covered externally by a black cap to reduce glare.

As also mentioned above, in an embodiment of the invention in which the radiation comprises a laser beam directed at a certain region in the lamp, the laser beam can be directed at one of the lead wires of the lamp. The lead wire of such a halogen lamp is generally made of Molybdenum, which can be heated to a high temperature without melting. In the method according to one preferred embodiment of the invention, a laser beam is directed at the Molybdenum lead wire to heat the lead wire to a temperature preferably in the region of 1200° C - 2000° C for a duration of about 20 s, which in turn heats the fill gas to crack the halogenated hydrocarbons, and the carbon freed in the process deposits itself on the hot lead wire in the form of molybdenum carbide (Mo₂C and MoC). The temperature should be chosen to lie below the melting temperature of the lead wire material in order to avoid deformation of the lead wire. A laser beam might also be directed at a point on the other lead wire, at the same time or at a later time, so that molybdenum carbide is deposited on both lead wires.

Evidently, a suitable laser beam could also be directed at a point on the inside surface of the vitreous bulb. As in the above described procedure, the heat generated in this way also heats the fill gas, and the carbon freed as a result will deposit itself on the hot glass surface. A suitable region in the bulb for heating in this manner would be, as was the case for the burner flame, a region in the shoulder-tip of the lamp, in order to avoid any unnecessary reduction in lumen output of the lamp.

The application of heat and/or radiation to a certain region in the lamp can be carried out in a single step, or can be carried out at intervals or in bursts. For example, owing to thermal properties of the material of the certain region, it may be necessary to perform the procedure by heating for a certain length of time, deactivating the source of heat and/or radiation to allow the material to recover, and repeating the procedure a number of times until the cracking process has been satisfactorily completed.

To ensure rapid and complete cracking when heating a specific region of the lamp, internal convection flow of the fill gas to the heated region is essential. Therefore, the lamp is preferably held at a certain orientation while being subjected to the heat and/or radiation from the external source. For example, in a preferred embodiment of the invention, when the method is being applied to blacken the shoulder-tip region of the lamp, the lamp is held in a top-down position during treatment, with the shoulder-tip end "downstairs" and the electrode end "upstairs". The heated and cracked fill gas will tend to travel upwards, being replaced by cooler fill gas, not yet cracked, from the upper regions of the lamp. In this way, complete cracking of essentially all the halogenated hydrocarbons of the fill gas can be achieved, and the carbon is largely prevented from settling anywhere other than in the shoulder-tip region, which is the hottest region in the lamp. Similarly, if a lead wire is being heated by radiation from an external source, such as a laser beam, the lamp is preferably held so that the region being heated - for example a part of the lead wire close to the pinch end of the lamp - is "downstairs", so that convective currents which occur when the neighbouring fill gas is heated effectively circulate the fill gas, allowing complete cracking of the halogenated hydrocarbons in the fill gas.

Naturally, the methods described above - treatment using a burner flame and treatment using a laser beam - can be applied in conjunction. For example, a burner flame can be directed at the shoulder tip region of the lamp, and a laser beam can be directed at a lead wire of the same lamp. These procedures could be carried out simultaneously or separately. It is also conceivable that a lamp can be treated for cracking by using a combination of laser beams, e.g. directing each laser beam at a lead wire, or directing one at a lead wire and another at an appropriate point on the inside of the vitreous bulb wall, so that the halogenated hydrocarbons are cracked and the carbon is deposited essentially on both of these suitable regions.

An appropriate method of manufacture of such a halogen lamp comprises forming a vitreous bulb and inserting into this a filament supported by legs, and introducing into the bulb an appropriate fill gas dosed with one or more halogenated hydrocarbons, and subsequently treating the lamp - prior to initial turning on the lamp for the first time-according to a method described above to crack the halogenated hydrocarbons of the fill gas. Since the method of treatment of the halogen lamp for cracking is independent of the actual formation and filling of the vitreous bulb, the treatment step can be carried out in a different location and/or at a later date, as convenient.

Other objects and features of the present invention will become apparent from the following detailed descriptions considered in conjunction with the accompanying drawing. It is to be understood, however, that the drawings are designed solely for the purposes of illustration and not as a definition of the limits of the invention.
- Fig. 1: shows a cross section through a high-pressure halogen lamp;
- Fig. 2a: shows a halogen lamp prior to being subject to heat from an external source according to a first embodiment;
- Fig. 2b: shows a halogen lamp after being subject to heat from an external source according to the first embodiment;
- Fig. 3a: shows a halogen lamp prior to being subject to radiation from an external source according to a second embodiment;
- Fig. 3b: shows a halogen lamp after being subject to radiation from an external source according to the second embodiment;
- Fig. 4: shows a cross section through a halogen lamp after being treated to crack the halogenated hydrocarbons using a method of treatment according to the invention.

In the drawings, like numbers refer to like objects throughout.

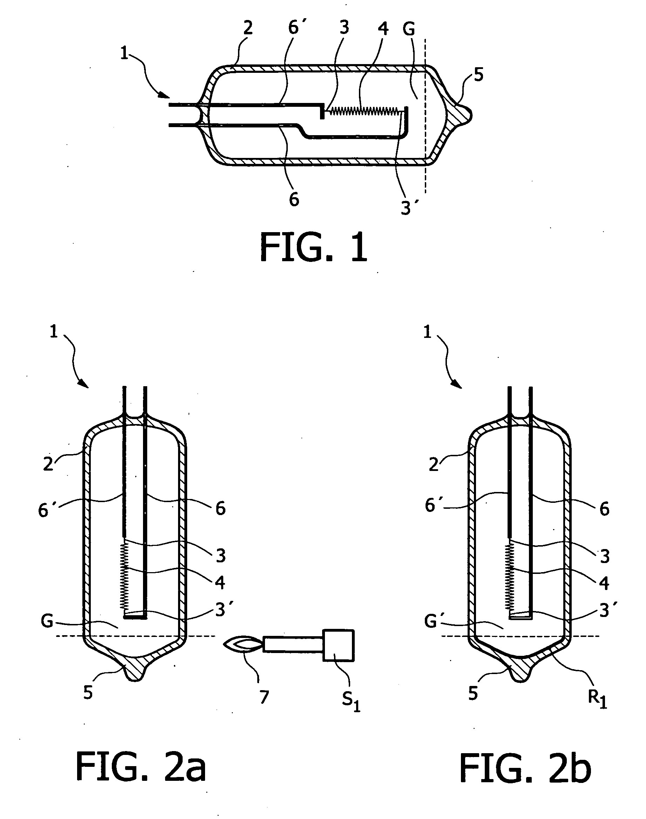

Fig. 1 shows a cross-section through a halogen lamp 1. The diagram, a greatly simplified cross-section, shows only those parts of the lamp 1 required for explanation of the method as described in the following. The basic components of such a lamp 1 are a vitreous bulb 2, which is generally made of glass, e.g. quartz glass or hard glass. The base of the vitreous bulb 2 is generally pinched or sealed around the ends of a pair of lead wires 6, 6'. The other ends of the lead wires 6, 6', which are most usually made of Molybdenum, are attached to the legs 3, 3' of a coil 4 or filament, generally made of tungsten. The vitreous bulb 2 encloses a fill gas G, which, prior to initial operation of the lamp, contains a mixture comprising a noble gas and halogenated hydrocarbons such as CH₂Br₂ at a pressure of 5-15bar. The lamp 1 shown is representative of, but not restricted to, a type of lamp used for automotive applications, such as a H7 or H11 type of lamp. The area at the top of the lamp, indicated by the area 5 to the right of the dotted line in the diagram, is commonly referred to as the shoulder-tip region 5 of the lamp.

Fig. 2a shows such a lamp 1 being subjected to a method of treatment to crack the halogenated hydrocarbons according to the present invention. Here, the lamp 1, which has not yet been turned on for the first time, is held in a top-down position. A burner S₁ is positioned at a suitable distance from the lamp 1, and a burner flame 7 issuing from the burner S₁ is directed at the shoulder-tip region 5 of the lamp. The burner flame 7 heats the fill gas G of the lamp 1, thereby cracking the halogenated hydrocarbons and releasing the halogen and carbon.

When heated to crack, the hydrocarbons decompose, whereby the main reaction is the formation of HBr and deposition of solid carbon, which can react further with residual oxygen and water to give carbon monoxide (CO), and with residual hydrogen to give methane (CH₄):

CH₂Br₂ → C(s) + 2 HBr(g)

C + O₂ / H₂O → CO ; C + 2H₂ ↔ CH₄

FT-IR (Fourier Transform Infrared) spectroscopy can be used to measure the HBr, CO and CH₄ pressures non-destructively, after the lamp has cooled to room temperature.

The table below gives measured pressures, at room temperature, for a H11 type (single-ended) car headlight lamps filled with 15 bar (Kr or Xe) + 300 ppm CH₂Br₂, as determined using FT-IR spectroscopy. The lamps were heated in the shoulder-tip region with a methane-oxygen flame as described above. The table shows the average results measured for four such lamps:

| State of lamp | HBr [mbar] |
|---|---|
| prior to treatment | 0.0 |
| after 10s flame-heating | 4.4 |
| after 20s flame-heating | 5.9 |
| after 30s flame-heating | 6.1 |
| burning for 1min at 12V | 5.9 |

The maximum HBr level of about 6.1mbar is reached after 3x10s flame heating. This also corresponds to the HBr level of the cracking process by flashing the coil. The 10s periods include heat-up, so the cracking or decomposition would probably be completed faster with continuous heating. Based on the maximum HBr level, about 3mbar carbon, in some form, is present in the lamp. Some of it reacts with residual oxygen to give CO and with residual hydrogen to give CH₄, where the levels of both species are considerably less than 1mbar. CO is rather stable and increases further when the coil is lighted, whereas CH₄ is cracked at or near the coil when burned at full voltage.

It can therefore be concluded that the most of the carbon is deposited in the shoulder-tip region. This deposit can be observed during the flame-heating as a local glow, since solid carbon emits in the visible spectrum whereas bare quartz does not. After cooling down, blackening of the shoulder-tip wall can be observed as a result of the graphite deposits.

Fig. 2b shows the same halogen lamp after being treated as described under Fig. 2a. Most of the carbon released from the decomposed or cracked fill gas G' has settled as graphite in a region R₁ on the inside surface of the shoulder-tip 5 of the lamp 1. The carbon once deposited in this way is no longer free to combine with tungsten vapour, so that the formation of tungsten carbide is largely inhibited. The legs 3, 3' of the filament 4 of the halogen lamp 1 treated in this way are therefore unlikely to be coated with tungsten carbide, so that the occurrence of zero-hour failure or coil leg breakages during transport is essentially eliminated. The region R₁ in the shoulder-tip 5 of the lamp 1 in which the graphite is deposited is the region which would generally be covered with a cap to reduce glare when the lamp 1 is intended for automotive applications, and is therefore in no way detrimental to the function of the lamp 1.

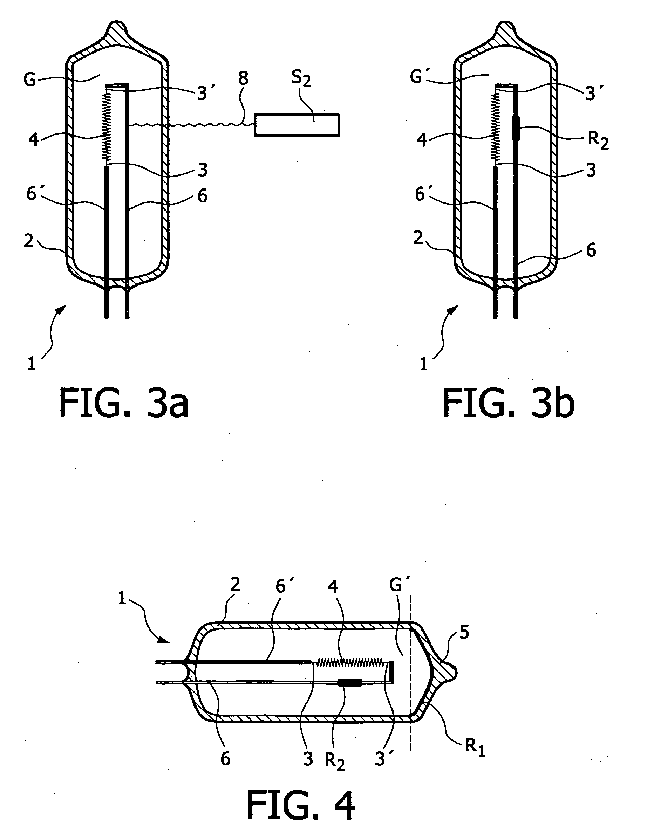

Another method of treatment is shown in Fig. 3a. Here, a laser beam 8 is being directed at a specific region in a lamp 1 which has not yet been turned on for the first time. The laser beam 8 originates from a suitable source S₂, which produces a beam with the necessary intensity and wavelength and can aim the beam with the required precision. Here, the laser beam 8 is being directed at a region on a lead wire 6 of the lamp 1. The lead wire 6 is heated at that point to a temperature in the range of 1200°C - 2000°C for a duration of about 20s, so that the halogenated.hydrocarbons in the fill gas G are also heated to a temperature at which cracking takes place, thus freeing up the halogen and carbon.

Fig. 3b shows the lamp 1 after the treatment as described under Fig. 3 a. The carbon freed from the halogenated hydrocarbons has settled in the region R₂ at which the laser beam was aimed, mainly in the form of molybdenum carbide. Again, as described under Fig. 2b, the carbon deposited in this manner has been to all intents and purposes removed from the now cracked fill gas G', so that a later formation of harmful tungsten carbide during operation of the lamp 1 is effectively prevented.

Fig. 4 shows a lamp 1 which has been subjected to both kinds of treatment as described above. By aiming a burner flame at the shoulder-tip region 5 of the lamp 1, and aiming a laser beam at a lead wire 6, the halogenated hydrocarbons of the fill gas are cracked, and the carbon deposited on both regions R₁, R₂.

Although the present invention has been disclosed in the form of preferred embodiments and variations thereon, it will be understood that numerous additional modifications and variations could be made thereto without departing from the scope of the invention. For example, the method of treating the halogen lamp can also be applied to lamps which are not of the single-ended variety as described above, but which have a lead wire or electrode at each end. For such lamps, treatment with a laser may be preferable if a blackening of any part of the vitreous bulb is not acceptable.

For the sake of clarity, it is also to be understood that the use of "a" or "an" throughout this application does not exclude a plurality, and "comprising" does not exclude other steps or elements. A "unit" may comprise a number of blocks or devices, unless explicitly described as a single entity.

## Claims

1. A method of treating a halogen lamp (1) comprising a filament (4) supported by legs (3, 3') in a vitreous bulb (2) enclosing a halogenated hydrocarbon fill gas (G), which method comprises applying heat to the lamp (1) - prior to initial operation of the lamp (1) - from a source (S₁) external to the lamp (1), so that the halogenated hydrocarbon fill gas (G) is cracked and carbon is deposited essentially on an interior surface of a shoulder-tip (5) of the lamp (1).

2. A method according to claim 1, wherein the heat is applied to the specific region (R₁) of the lamp (1) using a burner flame (7).

3. A method of treating a halogen lamp (1) comprising a filament (4) supported by legs (3, 3') in a vitreous bulb (2) enclosing a halogenated hydrocarbon fill gas (G), which method comprises applying radiation to the lamp (1) - prior to initial operation of the lamp (1) - so that the halogenated hydrocarbon fill gas (G) is cracked and carbon is deposited essentially at a specific region (R₁, R₂) of the lamp (1), whereby the specific region (R₁, R₂) of the lamp (1) is a region in the lamp (1) other than the legs (3, 3') of the filament (4) of the lamp (1), and wherein the radiation applied to the specific region (R₁, R₂) of the lamp (1) comprises a laser beam (8) originating from a source (S₂) external to the lamp (1), and the radiation is applied to the specific region (R₁, R₂) of the lamp (1) such that the specific region (R₁, R₂) of the lamp (1) at which the laser beam (8) is directed is heated to a predefined temperature for a predefined length of time to deposit carbon essentially at the specific region (R₁, R₂).

4. A method according to claim 3, wherein the specific region (R₁) is an interior surface of a shoulder-tip (5) of the lamp (1).

5. A method according to claim 3, wherein the specific region (R₂) is a lead wire (6, 6') connected to the filament (4) via one of the supporting legs (3, 3').

6. A method according to any of the preceding claims, wherein the application of heat and/or radiation applied to the specific region (R₁, R₂) of the lamp (1) is repeated a predefined number of times.

7. A method according to any of the preceding claims, wherein the lamp (1) is held at a certain orientation while being subjected to the heat and/or radiation from the external source (S₁, S₂).

8. A method according to claim 7, wherein the orientation of the lamp (1) is such that the specific region (R₁, R₂) is situated in a lower region of the lamp (1).

9. A method of manufacture of a halogen lamp (1) comprising a vitreous bulb (2) enclosing a halogenated hydrocarbon fill gas (G), which method comprises at least the steps of forming the vitreous bulb (2), inserting a filament (4) supported by legs (3, 3'), introducing the fill gas (G) and sealing the vitreous bulb (2), and subsequently treating the lamp (1) - prior to initial operation of the lamp (1) - according to the method of any of claims 1 to 8 to crack the halogenated hydrocarbon fill gas (G).

## Patentansprüche

1. Verfahren zur Behandlung einer Halogenlampe (1) mit einem von Schenkeln (3, 3') getragenen Glühfaden (4) in einem ein halogeniertes Kohlenwasserstofffüllgas (G) einschließenden Glaskolben (2), wobei dieses Verfahren das Zuführen von Wärme zu der Lampe (1) - und zwar vor dem ersten Betrieb der Lampe (1) - von einer gegenüber der Lampe (1) externe Quelle (S₁), so dass das halogenierte Kohlenwasserstofffüllgas (G) gekrackt wird und Kohlenstoff im Wesentlichen auf einer Innenfläche der Schulterspitze (5) der Lampe (1) abgelagert wird.

2. Verfahren nach Anspruch 1, wobei die Wärme unter Verwendung einer Brennerflamme (7) dem spezifischen Gebiet (R₁) der Lampe (1) zugeführt wird.

3. Verfahren zur Behandlung einer Halogenlampe (1) mit einem von Schenkeln (3, 3') getragenen Glühfaden (4) in einem ein halogeniertes Kohlenwasserstofffüllgas (G) einschließenden Glaskolben (2), wobei dieses Verfahren das Zuführen von Strahlung zu der Lampe (1) - und zwar vor dem ersten Betrieb der Lampe (1) -, so dass das halogenierte Kohlenwasserstofffüllgas (G) gekrackt wird und Kohlenstoff im Wesentlichen in einem spezifischen Gebiet (R₁, R₂) der Lampe (1) abgelagert wird, wobei das spezifische Gebiet (R₁, R₂) der Lampe (1) ein Gebiet in der Lampe (1) anders als die Schenkel (3, 3') des Glühfadens (4) der Lampe (1) ist und wobei die dem spezifischen Gebiet (R₁, R₂) der Lampe (1) zugeführte Strahlung einen von einer Quelle (S₂) außerhalb der Lampe (1) herrührenden Laserstrahl (8) umfasst, und die Strahlung dem spezifischen Gebiet (R₁, R₂) der Lampe (1) derart zugeführt wird, dass das spezifische Gebiet (R₁, R₂) der Lampe (1) worauf das Laserbündel (8) gerichtet wird, zum Ablagern von Kohlenstoff im Wesentlichen in dem spezifischen Gebiet (R₁, R₂) während einer vorbestimmten Zeit auf eine vorbestimmte Temperatur erhitzt wird.

4. Verfahren nach Anspruch 3, wobei das spezifische Gebiet (R₁) eine Innenfläche einer Schulterspitze (5) der Lampe (1) ist.

5. Verfahren nach Anspruch 3, wobei das spezifische Gebiet (R₂) eine über einen der Tragschenkel (3. 3') mit dem Glühfaden (4) verbundene Anschlussleitung (6, 6') ist.

6. Verfahren nach einem der vorstehenden Ansprüche, wobei die Zuführung von Wärme und oder Strahlung, zugeführt zu dem spezifischen Gebiet (R₁, R₂) der Lampe (1) eine vorbestimmte Anzahl male wiederholt wird.

7. Verfahren nach einem der vorstehenden Ansprüche, wobei die Lampe (1) in einer bestimmte Lage gehalten wird, während sie der Wärme und/oder der Strahlung von der externen Quelle (S₁, S₂) ausgesetzt wird.

8. Verfahren nach Anspruch 7, wobei die Lage der Lampe (1) derart ist, dass das spezifische Gebiet (R₁, R₂) sich in einer unteren Region der Lampe (1) befindet.

9. Verfahren zum Herstellen einer Halogenlampe (1) mit einem ein halogeniertes Kohlenwasserstofffüllgas (G) einschließenden Glaskolben (2). wobei dieses Verfahren wenigstens die nachfolgenden Verfahrensschritte umfasst: das Bilden des Glaskolbens (2), das Eingeben eines Glühfadens (4), der von Schenkeln (3, 3') unterstützt wird, das Einführen des Füllgases (G) und das Abdichten des Glaskolbens (2), und das nachfolgende Behandeln der Lampe (1) - vor dem ersten betrieb der Lampe (1) - nach dem Verfahren nach einem der Ansprüche 1 bis 8 zum Cracken des halogenierten Kohlenwasserstofffüllgases (G).

## Revendications

1. Procédé de traitement d'une lampe à halogène (1) comprenant un filament (4) qui est appuyé par des pieds (3, 3') dans une ampoule vitreuse (2) enfermant un gaz de remplissage d'hydrocarbones halogénés (G), lequel procédé comprend l'application de chaleur à la lampe (1) - avant le fonctionnement initial de la lampe (1) - à partir d'une source (S₁) en dehors de la lampe (1), de sorte que le gaz de remplissage d'hydrocarbones halogénés (G) est craqué et que le carbone est déposé essentiellement sur une surface intérieure d'une extrémité d'épaulement (5) de la lampe (1).

2. Procédé selon la revendication 1, dans lequel la chaleur est appliquée à la région spécifique (R₁) de la lampe (1) à l'aide d'une flamme de brûleur (7).

3. Procédé de traitement d'une lampe à halogène (1) comprenant un filament (4) qui est appuyé par des pieds (3, 3') dans une ampoule vitreuse (2) enfermant un gaz de remplissage d'hydrocarbones halogénés (G), lequel procédé comprend l'application de rayonnement à la lampe (1) - avant le fonctionnement initial de la lampe (1) -, de sorte que le gaz de remplissage d'hydrocarbones halogénés (G) est craqué et que le carbone est déposé essentiellement à l'endroit d'une région spécifique (R₁, R₂) de la lampe (1), cas dans lequel la région spécifique (R₁, R₂) de la lampe (1) est une région dans la lampe (1) autre que les pieds (3, 3') du filament (4) de la lampe (1), et dans lequel le rayonnement qui est appliqué à la région spécifique (R₁, R₂) de la lampe (1) comprend un faisceau laser (8) qui provient d'une source (S₂) en dehors de la lampe (1), et dans lequel le rayonnement est appliqué à la région spécifique (R₁, R₂) de la lampe (1) de telle façon que la région spécifique (R₁, R₂) de la lampe (1) vers laquelle le faisceau laser (8) est dirigé soit chauffée à une température prédéfinie pendant un laps de temps prédéfini afin de déposer du carbone essentiellement à l'endroit de la région spécifique (R₁, R₂).

4. Procédé selon la revendication 3, dans lequel la région spécifique (R₁) est une surface intérieure d'une extrémité d'épaulement (5) de la lampe (1).

5. Procédé selon la revendication 3, dans lequel la région spécifique (R₂) est un fil conducteur (6, 6') qui est connecté au filament (4) par le biais d'un des pieds d'appui (3, 3').

6. Procédé selon l'une quelconque des revendications précédentes 1 à 5, dans lequel l'application de chaleur et/ou de rayonnement qui est appliqué à la région spécifique (R₁, R₂) de la lampe (1) est répétée un nombre prédéfini de fois.

7. Procédé selon l'une quelconque des revendications précédentes 1 à 6, dans lequel la lampe (1) est maintenue à une certaine orientation alors qu'elle est soumise à la chaleur et/ou au rayonnement en provenance de la source externe (S₁, S₂).

8. Procédé selon la revendication 7, dans lequel l'orientation de la lampe (1) est telle de façon que la région spécifique (R₁, R₂) se situe dans une région inférieure de la lampe (1).

9. Procédé de fabrication d'une lampe à halogène (1) comprenant une ampoule vitreuse (2) qui enferme un gaz de remplissage d'hydrocarbones halogénés (G), lequel procédé comprend au moins les étapes suivantes consistant à former l'ampoule vitreuse (2), à insérer un filament (4) qui est appuyé par des pieds (3, 3'), à introduire le gaz de remplissage (G) et à mettre à échelle l'ampoule vitreuse (2), et ensuite à traiter la lampe (1) - avant le fonctionnement initial de la lampe (1) - selon le procédé de l'une quelconque des revendications précédentes 1 à 8 afin de craquer le remplissage de gaz d'hydrocarbones halogénés (G).
